# EUROPÄISCHE PATENTSCHRIFT

(11) **EP 1 064 121 B1**
(45) Veröffentlichungstag und Bekanntmachung des Hinweises auf die Patenterteilung: **10.12.2003**
(21) Anmeldenummer: 99934221.5
(22) Anmeldetag: 02.02.1999
(51) Int. Cl.: B25B 23/14, B23P 19/06

(54) **VERFAHREN ZUM AUFBRINGEN EINER GEWÜNSCHTEN VORSPANNKRAFT EINER SCHRAUBVERBINDUNG**
PROCESS FOR PRESTRESSING A SCREW CONNECTION TO THE DESIRED LEVEL
PROCEDE DE SERRAGE D'UN ASSEMBLAGE VISSE A LA PRECONTRAINTE SOUHAITEE

(30) Priorität: 05.02.1998 DE 19804468
(43) Veröffentlichungstag der Anmeldung: 03.01.2001
(73) Patentinhaber: ROBERT BOSCH GMBH, 70442 Stuttgart (DE)
(72) Erfinder: Wahl, Guenter, 71720 Oberstenfeld (DE)
(74) Vertreter: Thürer, Andreas
(86) Internationale Anmeldenummer: DE9900274
(87) Internationale Veröffentlichungsnummer: WO99039879

(56) Entgegenhaltungen:
- DE-A- 3 128 557
- DE-A- 4 214 354
- FR-A- 2 371 679
- GB-A- 2 096 361
- US-A- 4 961 035

## Beschreibung

Die Erfindung betrifft ein Verfahren zum Aufbringen einer gewünschten Vorspannkraft einer Schraubverbindung.

### Stand der Technik

Verfahren zum Aufbringen einer gewünschten Vorspannkraft einer Schraubverbindung sind bekannt (siehe, zum Beispiel, FR-A-2 371 679, das als nächsliegender Stand der Technik angesehen wird). Sie dienen dazu, bei einer zumindest zwei Bauteile und ein Befestigungselement mit Gewinde aufweisenden Schraubenverbindung, die Bauteile mit einer Vorspannkraft zu beaufschlagen, so daß sie aneinander befestigt werden. Die Vorspannkraft kann sich durch Setzen der Bauteile zu einer sogenannten Restvorspannkraft verringern. Diese Restvorspannkraft muß ausreichend hoch sein, damit die Schraubenverbindung mechanischen Anforderungen genügt. Die beim Verschrauben der Bauteile aufzubringende Vorspannkraft muß also so bemessen sein, daß auch die Restvorspannkraft genügend groß ist, damit diese mechanischen Anforderungen erfüllt werden. Bei den bekannten Verfahren hat man zum Erreichen der Vorspannkraft das Befestigungselement mit einem bestimmten Anzugsdrehmoment beaufschlagt, da die Vorspannkraft von diesem Anzugsdrehmoment abhängt. Es wurde also ein vorgegebenes Drehmoment aufgebracht, bei dem man davon ausging, daß damit die gewünschte Vorspannkraft erreicht werden kann. Bei diesem Verfahren ist nachteilig, daß der Einfluß der Reibung zwischen dem Befestigungselement und den Bauteilen nicht berücksichtigt wird. Liegt aufgrund von Gewindetoleranzen oder einem verschmutzten Gewinde eine erhöhte Reibung vor, muß das Anzugsdrehmoment erhöht werden, um die gewünschte Vorspannkraft zu erreichen. Da das bekannte Verfahren jedoch aufgrund des vorgegebenen Anzugsdrehmoments die Verschraubung beendet, ist es in bestimmten Fällen möglich, daß die notwendige Vorspannkraft nicht aufgebracht wird. Ist die Reibung jedoch besonders gering, wird dennoch mit dem vorgegebenen Anzugsdrehmoment angezogen. Dies kann zur Beschädigung der Schraubverbindung führen.

Weiterhin ist im Stand der Technik ein Verfahren bekannt, bei dem sogenannte Dehnschrauben zur Verbindung der Bauteile verwendet werden. Wird an dieser Dehnschraube ein Anzugsdrehmoment aufgebracht, dehnt sich der Schaft der Schraube. Dies führt zu einem Ansteigen des aufzubringenden Anzugsdrehmoments. Dieses Ansteigen ist zunächst nicht linear und es obliegt dem Anwender, welches Schwellmoment er vorgibt, das dann als Startbedingung dient, von der aus nun um einen bestimmten, vorgegebenen Verdrehwinkel weitergedreht wird, da die Vorspannkraft von diesem Verdrehwinkel abhängt. Bei diesem bekannten Verfahren ist nachteilig, daß die Drehmoment-Drehwinkel-Kennlinie, bis sie in ein nahezu lineares Verhalten übergeht, sehr stark schwanken kann. Da aber die Winkelmessung bei einem festgelegten Schwellmoment beginnt, können auch bei diesem Verfahren Vorspannkraft-Ungenauigkeiten auftreten. Beispielsweise bei verschmutztem Gewinde kann vorzeitig ein erhöhtes Anzugsdrehmoment benötigt werden. Dieses kann fälschlicherweise als Schwellmoment erkannt werden, so daß die Startbedingung verfrüht vorliegen kann. Das heißt, daß ab diesem "falschen" Schwellmoment das Befestigungselement um den vorgegebenen Verdrehwinkel angezogen wird. Dabei wird jedoch die notwendige Vorspannkraft nicht aufgebracht.

Schließlich sind im Stand der Technik Verfahren bekannt, bei denen die Vorspannkraft indirekt gemessen wird. Beispielsweise wird während des Aufbringens des Anzugsdrehmoments die Verformung des Schraubenkopfs gemessen. Hierzu sind besonders ausgebildete beziehungsweise behandelte Schrauben notwendig. Es werden am Schraubenkopf sogenannte Dehnmeßstreifen angebracht, die bei einer Längenänderung aufgrund der Verformung des Schraubenkopfs ihren elektrischen Widerstand ändern. Diese Widerstandsänderung wird erfaßt und gibt Aufschluß darüber, welche Vorspannkraft vorliegt. Es ist also bei diesem Verfahren notwendig, besondere Befestigungselemente, beispielsweise Sonderschrauben, zu verwenden.

Bei einem weiteren bekannten Verfahren werden ebenfalls spezielle Befestigungsmittel, beispielsweise Sonderschrauben, verwendet. Diese weisen an ihrem Schraubenkopf eine Beschichtung auf, die es ermöglicht, eine Ultraschallwelle in Längsrichtung in die Schraube einzuleiten und zu empfangen. Die Ultraschallwelle wird am Ende des Gewindes beziehungsweise am Schraubenende reflektiert und zum Schraubenkopf zurückgesandt. Für dieses Verfahren können auch konventionelle Ultraschall-Prüfköpfe beziehungsweise allgemein alle Ultralschall erzeugenden und empfangenden Verfahren verwendet werden. Beim Aufbringen eines Anzugsdrehmoments längt sich die Schraube beziehungsweise ihr Schraubenschaft. Durch diese Längenänderung benötigt die Ultraschallwelle einen längeren Zeitraum, um durch die Schraube hindurchzulaufen. Diese auch als Laufzeitunterschied bekannte Zeitdauer gibt Auskunft darüber, wie stark die Schraube gedehnt wurde. Aufgrund dieser Dehnung beziehungsweise Längenänderung kann auf die aufgebrachte Vorspannkraft der Schraubverbindung geschlossen werden.

Bei diesen Verfahren, die eine besonders behandelte beziehungsweise ausgebildete Sonderschraube oder dergleichen benötigen, ist nachteilig, daß diese Sonderschrauben teuer sind. Dies wirkt sich insbesondere in der Automobilindustrie aus, da hier an einem Kraftfahrzeug eine hohe Anzahl von Schraubverbindungen vorliegt. Diese Verfahren mit Sonderschrauben sind also bei der Serienproduktion unwirtschaftlich.

Die Erfinding ist im Anspruch 1 definiert.

### Vorteile der Erfindung

Dieses Verfahren mit den Merkmalen des Anspruchs 1 hat den Vorteil, daß auf teuere Spezialschrauben verzichtet, dennoch die gewünschte Vorspannkraft bei einer Schraubverbindung genau aufgebracht werden kann. Es ist vorgesehen, daß ein Referenzverlauf des Anzugsdrehmoments der Schraubverbindung in Abhängigkeit des Drehwinkels eines Befestigungselements der Schraubverbindung erfaßt oder berechnet wird. In Abhängigkeit dieses Referenzverlaufs wird eine Referenzfunktion ermittelt, die dem Referenzverlauf zumindest annähernd entspricht, das heißt, der Referenzverlauf wird quasi durch diese Referenzfunktion ersetzt, die insbesondere eine einfache mathematische Funktion sein kann. Diese Referenzfunktion gibt also vereinfacht den Referenzverlauf wieder und weist einen Schnittpunkt mit einer Achse eines Koordinatensystems auf, auf der der Drehwinkel aufgetragen ist. Ausgehend von diesem Schnittpunkt wird ein Referenzverdrehwinkel ermittelt, der zwischen dem im Schnittpunkt vorliegenden Drehwinkel und dem Drehwinkel liegt, der der gewünschten Vorspannkraft zugeordnet ist.

Anschließend wird an einer anderen Schraubverbindung ein Verlauf des Anzugsdrehmoments in Abhängigkeit des Drehwinkels eines Befestigungselements ermittelt. Dieser Verlauf des Anzugsdrehmoments wird durch eine einfache mathematische Funktion angenähert, so daß sie zumindest bereichsweise dem Verlauf des Anzugsdrehmoments entspricht. Diese Funktion weist ebenfalls einen Schnittpunkt mit der Achse des Koordinatensystems auf, auf der der Drehwinkel aufgetragen ist. In vorteilhafter weise ist es vorgesehen, daß -ausgehend vom Schnittpunkt der Funktion mit der Winkelachse- das Befestigungselement der anderen Schraubverbindung vorzugsweise um den Referenzdrehwinkel weitergedreht wird. Dadurch wird die gewünschte Vorspannkraft erreicht. Durch Bestimmung des Schnittpunkts der Funktion wird mithin eine reproduzierbare Startbedingung für das Weiterdrehen um vorzugsweise den Referenzverdrehwinkel geschaffen, so daß bei einer Schraubverbindungen, die insbesondere eine Serien-Schraubverbindung sein kann, reproduzierbare Ergebnisse, also die gewünschte Vorspannung in einem kleinen Toleranzbereich, erreicht wird.

Bei dem erfindungsgemäßen Verfahren wurde erkannt, daß die Vorspannkraft bei Schraubverbindungen mit unterschiedlich hoher Reibung lediglich vom Verdrehwinkel abhängig ist. Das aufzubringende Anzugsdrehmoment hingegen ist stark von der Reibung zwischen dem Befestigungselement und zumindest einem Bauteil abhängig. Es hat sich jedoch überraschenderweise gezeigt, daß durch eine einfache Funktion der Verlauf des Anzugsdrehmoments in Abhängigkeit des Drehwinkels -zumindest bereichsweise- mit hinreichender Genauigkeit wiedergegeben werden kann. Dabei hat man erkannt, daß der Schnittpunkt dieser Funktion mit der Winkelachse im wesentlichen mit dem Schnittpunkt der Referenzfunktion auf der Winkelachse zusammenfällt, und zwar auch bei Anzugsdrehmomentverläufen, bei denen unterschiedlich hohe Reibungen zugrundeliegen. Mithin kann für einen Verdrehwinkel, bei dem die gewünschte Vorspannkraft erreicht wird, eine genaue Startbedingung vorgegeben werden. Die Verwendung von -im Stand der Technik bekannten- Schwellmomenten, die eine ungenaue Startbedingung vorgeben, ist beim erfindungsgemäßen Verfahren nicht notwendig.

Weiterhin ist vorteilhaft, daß zur Durchführung des erfindungsgemäßen Verfahrens bekannte Sensortechnik verwendet werden kann, mit der beispielsweise das Anzugsdrehmoment und/oder der Drehwinkel erfaßt werden. Ferner ist vorteilhaft, daß keine Sonderschrauben verwendet werden müssen, so daß sich dieses Verfahren besonders für die Massenfertigung eignet. Überdies wird erreicht, daß unterschiedliche Reibungsverhältnisse im wesentlichen keinen Einfluß auf die Vorspannkraft haben, da vorzugsweise um den Referenzverdrehwinkel weitergedreht wird, wobei es bei besonders hoher Reibung eines höheren Anzugsdrehmoments bedarf.

Damit ist es in besonders vorteilhafter Weise möglich, auch bisher verwendete Vorrichtungen zum Verschrauben der Befestigungselemente zu verwenden, so daß insbesondere vorgesehen sein kann, daß das Anzugsdrehmoment mit einer an sich bekannten Torsionsmeßeinrichtung erfaßt werden kann.

In besonders bevorzugter Ausführungsform ist vorgesehen, daß die Referenzfunktion der Vorspannkraft oder des Anzugsdrehmoments durch eine lineare mathematische Funktion, also eine Gerade, angenähert ist. Die Steigung der Geraden entspricht zumindest bereichsweise der Steigung des Referenzverlaufs, und zwar in dem Bereich, in dem die Vorspannkraft oder das Anzugsdrehmoment ansteigt und insbesondere die Steigung dabei im wesentlichen konstant bleibt. Insbesondere kann dies kurz vor Erreichen der gewünschten Vorspannkraft erreicht sein.

In einer Weiterbildung der Erfindung ist vorgesehen, daß die Funktion, die dem Verlauf des Anzugsdrehmoments der anderen Schraubverbindung entspricht, eine lineare mathematische Funktion, also eine Gerade ist. Die Steigung dieser Geraden entspricht zumindest bereichsweise der Steigung des Verlaufs des Anzugsdrehmoments. Dies kann kurz vor Erreichen der gewünschten Vorspannkraft vorliegen.

Einfache, lineare Funktionen, insbesondere Geradengleichungen, können auf besonders einfache Art und Weise hergeleitet werden, indem beispielsweise von der Referenzfunktion und der Funktion an gewünschter Stelle die sogenannte erste Ableitung gebildet wird, die die Steigung der Funktion beziehungsweise Referenzfunktion an dieser Stelle wiedergibt. Es ist jedoch auch möglich, die allgemeine Geradegleichung, Zwei-Punkte-Form und so weiter, zum Herleiten zu verwenden.

In einer weiteren bevorzugten Ausführungsform kann vorgesehen sein, daß beim Zusammenfallen der Geraden und der Referenzgeraden (in einem vorzugsweise xy-Koordinatensystem) das Befestigungsmittel der anderen Schraubverbindung um den Referenzverdrehwinkel oder mit dem Anzugsdrehmoment weitergedreht wird, welcher/welches zum Erreichen der gewünschten Vorspannkraft aufzubringen ist. Alternativ kann vorgesehen sein, daß beim Zusammenfallen der Schnittpunkte der Funktion und der Referenzfunktion, insbesondere der Geraden und der Referenzgeraden, auf der Achse des Koordinatensystems eine Weiterdrehung des Befestigungselements um den Referenzverdrehwinkel oder mit dem Anzugsdrehmoment zum Erreichen der gewünschten Vorspannkraft erfolgt. Selbstverständlich ist es auch möglich -wenn die Schnittpunkte oder die Gerade und die Referenzgerade nicht zusammenfallen- eine Weiterdrehung des Befestigungselements der anderen Schraubverbindung um einen korrigierten Referenzdrehwinkel oder mit einem korrigierten Anzugsdrehmoment vorzunehmen. Fallen die Schnittpunkte oder die Geraden nicht zusammen, liegt eine Schraubverbindung vor, bei der mithin eine Drehwinkelabweichung von dem Schnittpunkt der Referenzfunktion mit der Winkelachse gegeben ist. Ausgehend von dieser Abweichung ist es möglich, das Anzugsdrehmoment oder den Verdrehwinkel des Befestigungselements der anderen Schraubverbindung zu verändern, also quasi eine Korrektur erfolgt, damit die gewünschte Vorspannkraft dennoch erreicht werden kann. Die Korrektur ist dabei abhängig von der Höhe der Abweichung. Dabei ist es möglich -wenn beispielsweise um einen korrigierten Referenzverdrehwinkel weitergedreht wird- das Anzugsdrehmoment zu überwachen, so daß ein maximales, vorgebbares Anzugsdrehmoment nicht überschritten wird. Sollte durch den geänderten beziehungsweise korrigierten Referenzverdrehwinkel ein Anstieg des Anzugsdrehmoments über diesen maximalen Wert erfolgen, so kann daraus geschlossen werden, daß die Schraubverbindung fehlerhaft ist, und beispielsweise das Gewinde beschädigt ist oder aber eine falsche Schraube verwendet wurde. Selbstverständlich ist es auch möglich -wenn um einen korrigierten Wert des Anzugsdrehmoments weitergedreht wirdden Verdrehwinkel zu überwachen. Es kann hier ein maximaler, vorgebbarer Verdrehwinkel festgelegt werden, wobei ein Überschreiten dieses maximalen Wertes ebenfalls darauf geschlossen werden kann, daß eine fehlerhafte Schraubverbindung vorliegt.

Weitere Ausgestaltungen ergeben sich aus den Unteransprüchen.

Die Erfindung wird im folgenden anhand eines Ausführungsbeispiels mit Bezug auf die Zeichnung näher erläutert. Es zeigen:
- Figur 1: eine Schraubvorrichtung zum Einschrauben eines Befestigungselements bei einer Schraubverbindung,
- Figur 2: eine Schraubverbindung,
- Figuren 3a bis 5b: Diagramme mit einer Darstellung der Vorspannkraft in Abhängigkeit des Verdrehwinkels und eines Anzugsdrehmoments in Abhängigkeit des Drehwinkels, und
- Figuren 6: eine Darstellung des Anzugsdrehmomoments und der Vorspannkraft in Abhängigkeit des Drehwinkels, wobei linearisierte Verläufe angenommen sind.

### Ausführungsbeispiel

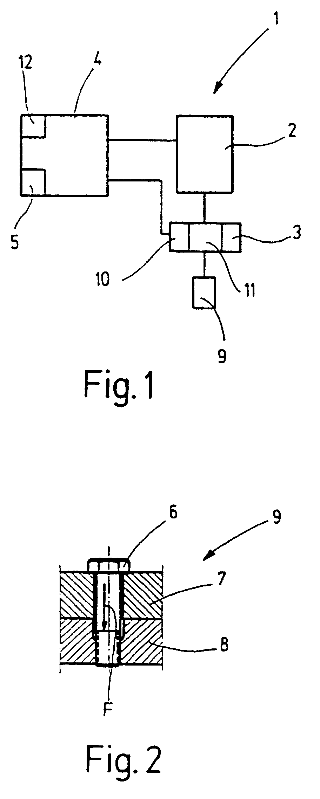

Figur 1 zeigt eine Schraubanordnung 1, die einen Schraubantrieb 2 und eine Meßeinrichtung 3 umfaßt. Die Schraubanordnung 1 umfaßt ferner eine Steuereinheit 4, der ein elektronischer Speicher 5 zugeordnet ist.

An den Schraubantrieb 2 ist ein hier nicht dargestelltes Werkzeug ankoppelbar, mit dem ein Befestigungselement 6 (Figur 2), insbesondere eine Schraube, mit einem Anzugsdrehmoment beaufschlagt werden kann, so daß Bauteile 7 und 8 aneinander befestigt werden können. Damit die Bauteile 7 und 8 sicher aneinander befestigt werden können, also eine Vorspannkraft F an einer Schraubverbindung 9 aufgebracht werden kann, weist die Meßeinrichtung 3 eine Drehwinkelmeßeinrichtung 10 und eine Anzugsdrehmomentmeßeinrichtung 11 auf. Diese kann als Torsionsmeßeinrichtung ausgebildet sein, die beispielsweise die Torsion des Werkzeugs mißt. Alternativ ist es auch möglich, die Anzugsdrehmomentmeßeinrichtung 11 dem Schraubantrieb 2 zuzuordnen, der vorzugsweise einen elektromotorischen Antrieb aufweist. Ferner kann die Meßeinrichtung 3 eine Meßvorrichtung zur Drehwinkel-abhängigen Erfassung der Vorspannkraft F aufweisen.

Die von der Meßeinrichtung 3 erfaßten Meßwerte, also Anzugsdrehmoment und Vorspannkraft in Abhängigkeit des Drehwinkels, werden der Steuereinheit 4 übermittelt, die den Schraubantrieb 2 in Abhängigkeit dieser Meßwerte ansteuert. Die Meßvorrichtung zur Erfassung der Vorspannkraft kann eine an sich bekannte Meßeinrichtung (Ultraschallmeßeinrichtung, Dehnungsmeßstreifen-Einrichtung oder dergleichen) sein. Die von der Meßeinrichtung 3 in Abhängigkeit des Drehwinkels der Schraube (Befestigungselement 6) erfaßten Meßwerte sind als Kennlinien im Speicher 5 der Steuereinheit ablegbar. Somit hat die Steuereinheit 4 Zugriff auf den Speicherinhalt, der vorzugsweise von einer in der Schraubanordnung enthaltenen Auswerteeinrichtung 12 auf elektronischem Wege verarbeitet werden kann. Die Steuereinheit 4 steuert den Schraubantrieb 2 in Abhängigkeit von der Auswerteeinrichtung 12 bereitgestellten Informationen.

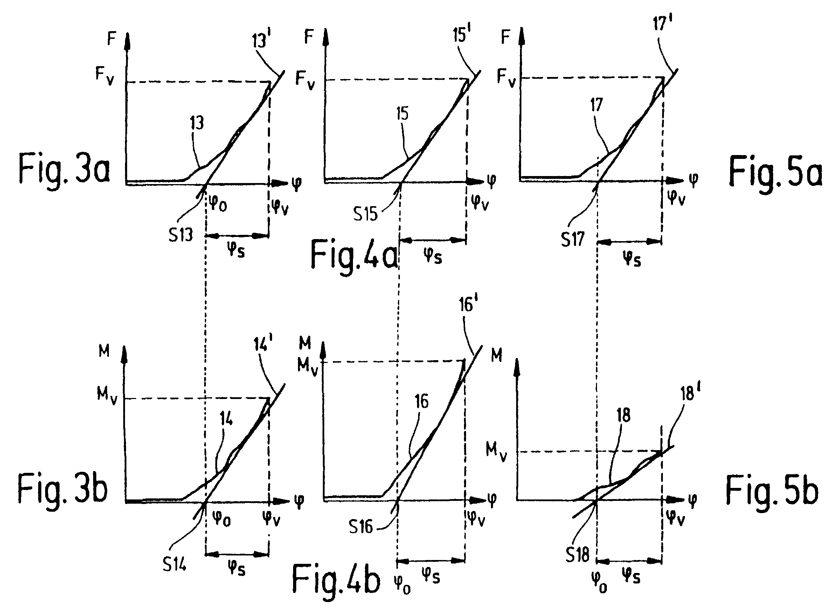

In Figur 3a ist ein Referenzverlauf 13 einer Vorspannkraft F über einem Drehwinkel ϕ eines Befestigungselements 6 wiedergegeben. Der Referenzverlauf 13 kann mit einer Meßeinrichtung (Ultraschallverfahren oder dergleichen) erfaßt oder berechnet werden. Die gewünschte Vorspannkraft Fᵥ ist bei einem Drehwinkel ϕᵥ der Schraube erreicht.

Figur 3b zeigt einen Referenzverlauf 14 eines Anzugsdrehmoments M in Abhängigkeit des Drehwinkels ϕ. Es ist hier aus den Figuren 3a und 3b ersichtlich, daß zum Erreichen der gewünschten Vorspannkraft Fᵥ ein Anzugsdrehmoment Mᵥ aufgebracht werden muß.

In den Figuren 3a und b ist eine Referenzfunktion 13' beziehungsweise 14' wiedergegeben, die an den Referenzverlauf 13 beziehungsweise 14 angenähert ist. Die Referenzfunktion 13' beziehungsweise 14' weist einen Schnittpunkt S13 beziehungsweise S14 mit der Winkelachse auf . Es fällt auf, daß die Schnittpunkte in beiden Diagrammen an derselben Stelle ϕ₀ auf der Winkelachse liegen. In den Figuren 3a und b ist der Referenzverlauf 13 und 14 bei einer Schraubverbindung dargestellt, bei der eine normale Reibung beim Einschrauben des Befestigungselements 6 vorliegt.

In Figur 4a ist ein Referenzverlauf 15 einer Vorspannkraft F über dem Drehwinkel ϕ wiedergegeben. An den Referenzverlauf 15 ist eine Referenzfunktion 15' angenähert. Sie weist einen Schnittpunkt S15 mit der Winkelachse auf. Figur 4b zeigt einen Referenzverlauf 16 eines Anzugsdrehmoments M in Abhängigkeit des Drehwinkels ϕ. An den Referenzverlauf 16 ist eine Referenzfunktion 16' angenähert, die einen Schnittpunkt S16 mit der Winkelachse besitzt. Aus den Figuren 4a und 4b ist ersichtlich, daß zur Aufbringung der gewünschten Vorspannkraft Fᵥ ein im Vergleich zu Figur 3b erhöhtes Anzugsdrehmoment Mᵥ aufgebracht werden muß. Dies resultiert daraus, daß bei der Schraubverbindung, deren Referenzverläufe in Figur 4a und 4b dargestellt sind, eine erhöhte Reibung zwischen dem Befestigungselement und einem Bauteil vorliegt. Die Schnittpunkte S15 und S16 liegen im wesentlichen an derselben Stelle ϕ₀ auf der Winkelachse.

Figur 5a zeigt einen Referenzverlauf 17 der Vorspannkraft in Abhängigkeit des Drehwinkels. Dieser Referenzverlauf 17 ist durch eine Referenzfunktion 17' angenähert. In Figur 5b ist das zu Figur 5a zugehörige Anzugsdrehmoment dargestellt. Es ist also ein Referenzverlauf 18 wiedergegeben, der durch eine Referenzfunktion 18' angenähert ist. Die Referenzfunktion 17' beziehungsweise 18' weist einen Schnittpunkt S17 beziehungsweise S18 mit der Winkelachse auf. Zur Aufbringung der vorspannkraft Fᵥ ist ein geringes Anzugsdrehmoment Mᵥ gemäß Figur 5b notwendig, da hier eine Schraubverbindung mit sehr geringer Reibung vorliegt.

Insgesamt zeigt sich bei den Figuren 3a, 4a und 5a, daß -obwohl unterschiedliche Reibung vorlag- der Verlauf der Vorspannkraft nahezu identisch ist. Es zeigt sich weiterhin, daß die Referenzverläufe 13, 15 und 17 zunächst im wesentlichen parallel zur Winkelachse verlaufen, das heißt bei der Vorspannkraft nahe null, um dann auf den Wert der gewünschten Vorspannkraft Fᵥ anzusteigen. Beim zur Winkelachse parallelen Verlauf kann davon ausgegangen werden, daß der Schraubenkopf das Bauteil 7 noch nicht berührt hat. Nachdem eine Berührung erfolgt ist, wird unter Weiterdrehung des Befestigungselements 6 die gewünschte Vorspannkraft Fᵥ aufgebaut.

Aus den Figuren 3b, 4b und 5b wird deutlich, daß das aufzubringende Anzugsdrehmoment Mᵥ stark abhängig von der Reibung ist. Es zeigt sich jedoch, daß - obwohl unterschiedliche Reibung vorliegt- die an die Referenzverläufe 14, 16 und 18 angenäherten Referenzfunktionen 14', 16' und 18' eine unterschiedliche Steigung aufweisen, ihre Schnittpunkte S14, S16 und S18 jedoch mit derselben Winkelstelle ϕ₀ zusammenfällen, wie das in den Figuren 3a, 4a und 5a der Fall ist.

Aus den Darstellungen der Figuren 3a bis 5b läßt sich ohne weiteres erkennen, daß ein Sollverdrehwinkel ϕₛ (ϕᵥ- ϕ₀) notwendig ist, um die gewünschte Vorspannkraft Fᵥ zu erreichen.

Die Referenzverläufe 15 bis 18 sowie die Referenzfunktionen 13' bis 18' können in dem Speicher 5 (Figur 1) der Steuereinheit 4 abgespeichert werden.

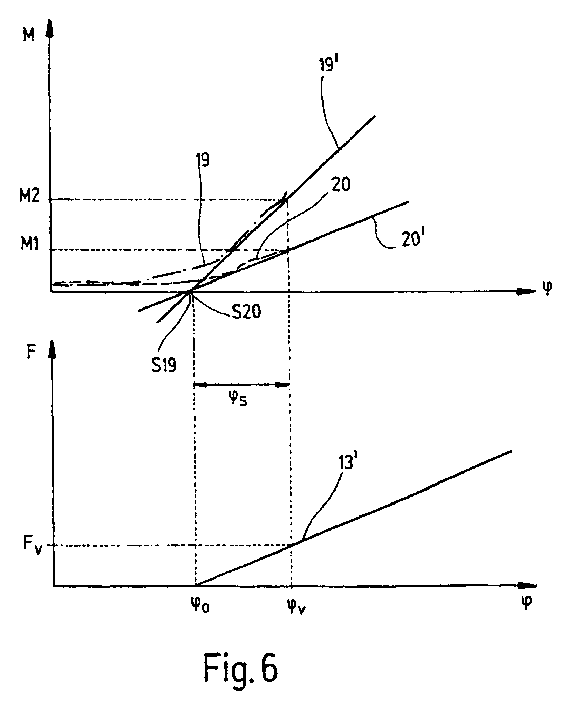

In Figur 6 sind zwei Verläufe 19 und 20 jeweils eines Anzugsdrehmoments über dem Winkel ϕ dargestellt, die mit der Anzugsdrehmomentmeßeinrichtung 11 (Figur 1) an jeweils einer Serien-Schraubenverbindung aufgezeichnet wurden. Das heißt, diese Schraubenverbindungen weisen ein gewöhnliches Befestigungselement auf, mit dem es nicht möglich ist, die Vorspannkraft direkt zu bestimmen, das heißt heute verfügbare Serienschrauben sind. Derartige Befestigungselemente sind im Vergleich zu Sensorschrauben sehr preiswert. Bei dem Verlauf 19 des Anzugsdrehmoments über dem Winkel ϕ wird -wie bereits erwähnt- das Anzugsdrehmoment bestimmt. Sobald die Steigung des Verlaufs 19 sich im wesentlichen nicht mehr ändert, wird eine Funktion 19' ermittelt, die an den ansteigenden Teil des Verlaufs 19 angenähert ist. Es zeigt sich, daß diese Funktion 19' einen Schnittpunkt S19 mit der Winkelachse aufweist. Für die Steuereinheit 4 ergibt sich aus diesem Schnittpunkt S19 eine Startbedingung, von der aus lediglich mit dem Sollverdrehwinkel ϕₛ weitergedreht wird. Dazu muß das Drehmoment M2 aufgebracht werden, worauf sich die gewünschte Vorspannkraft Fᵥ einstellt. Es zeigt sich, daß der Schnittpunkt S19 auf der Winkelachse mit der Stelle ϕ₀ beispielsweise der Referenzfunktion 13' zusammenfällt. Es ist also möglich, den Winkel ϕ₀ rückblickend zu bestimmen, bei dem das Anzugsdrehmoment M des Verlaufs 19 ohne die Einflußparameter Reibung und Fügeverhalten von M = 0 an linear ansteigen würde. Daher ist der Rückschluß möglich, lediglich um den Referenzverdrehwinkel ϕₛ weiterzudrehen, um die gewünschte Vorspannkraft Fᵥ zu erreichen.

Der beispielhafte Verlauf 20 ergibt sich aus einer Serien-Schraubenverbindung, bei der eine gegenüber dem Verlauf 19 geringere Reibung vorliegt. An den Verlauf 20 wird in seinem ansteigenden Bereich eine Funktion 20' angenähert, die mit der Winkelachse einen Schnittpunkt S20 bildet. Ausgehend von diesem Schnittpunkt S20 erfolgt auch hier die Weiterdrehung um den Referenzdrehwinkel ϕₛ, so daß sich auch bei dieser Schraubverbindung die Vorspannkraft Fᵥ einstellt.

Insgesamt zeigt sich, daß eine hinreichend genaue Annäherung der Funktionen beziehungsweise Referenzfunktionen insbesondere mit einer einfachen Geraden an die tatsächlich gemessenen Verläufe möglich ist. Eine solche Gerade kann auf mathematischem Wege einfach und schnell beispielsweise in der Auswerteeinrichtung 12 erzeugt werden, so daß ein einfacher und schneller Vergleich mit einer Referenzgeraden (Referenzfunktion 13' bis 18') möglich ist.

Ausgehend vom Schnittpunkt S19 beziehungsweise S20 ist es wie beschrieben möglich, um einen Sollverdrehwinkel ϕₛ das Befestigungselement zu drehen, damit die gewünschte Vorspannkraft Fᵥ erreicht werden kann. Hierbei ist es noch möglich, gleichzeitig das Anzugsdrehmoment M zu überwachen, so daß ein Überschreiten eines vorgebbaren, maximalen Anzugsdrehmoments erfaßt wird. Selbstverständlich ist es auch möglich, ein minimales Anzugsdrehmoment vorzugeben. Bei der Überwachung wird damit erreicht, daß bei einer Schraubverbindung, bei der das Anzugsdrehmoment außerhalb dieser Grenzen liegt, die Schraubenverbindung als fehlerhaft ermittelt werden kann. Selbstverständlich ist es auch möglich, ausgehend von der Startbedingung, also dem Schnittpunkt S19 beziehungsweise S20 mit einem vorgebbaren Anzugsdrehmoment weiterzudrehen, dem der Wert der gewünschten Vorspannkraft Fᵥ zugeordnet ist. Hierbei müssen aber sehr enge Toleranzen für die Reibung eingehalten werden. Dabei kann der Sollverdrehwinkel ϕₛ überwacht werden. Unterschreitet beziehungsweise überschreitet der Weiterdrehwinkel diesen Referenzverdrehwinkel ϕₛ, so kann auch hier eine fehlerhafte Schraubverbindung erkannt werden.

## Patentansprüche

1. Verfahren zum Aufbringen einer gewünschten Vorspannkraft (Fᵥ) einer Schraubverbindung (9), mittels der mindestens zwei Bauteile (7,8), aneinander befestigt werden, mit folgenden Schritten:
- Erfiassung eines Referenzverlaufs (14,16, 18) des Anzugsdrehmoments (M) der Schraubverbindung in Abhängigkeit des Drehwinkels (ϕ) eines Befestigungselements der Schraubverbindung, indem an mehreren Schraubverbindungen (9) Probeverläufe des Anzugsdrehmoments in Abhängigkeit des Drehwinkels (ϕ) erfaßt werden, und diese Probeverläufe mathematisch gemittelt werden, oder Berechnung dieses Referenzverlaufs (14, 16, 18) des Anzugsdrehmoments (M) der Schraubverbindung
- Ermittlung einer Referenzfunktion (14',16', 18'), die dem Referenzverlauf (14,16,18) des Anzugsdrehmoments (M) zumindest bereichsweise annähernd entspricht und die einen Schnittpunkt (S14, S16, S18) mit einer Achse eines Koordinatensystems besitzt, auf der der Drehwinkel (ϕ) aufgetragen ist,
- Den Mittelwert eines Referenzverdrehwinkels (ϕₛ) des Befestigungselements bilden, der zwischen dem im Schnittpunkt (S14, S16, S18) vorliegenden Drehwinkel (ϕₒ) und dem gewünschten Anzugsdrehmoment (Mᵥ) zugeordneten Drehwinkel (ϕᵥ) liegt,
- Erfassung eines Verlaufs (19, 20) des Anzugsdrehmoments (M) einer anderen Schraubverbindung (9) in Abhängigkeit des Drehwinkels (ϕ) eines Befestigungselements (6) der anderen Schraubverbindung (9),
- Ermittlung einer Funktion (19', 20'), die dem Verlauf des Anzugsdrehmoments (M) zumindest bereichsweise annähernd entspricht und die einen Schnittpunkt (S19, S20) mit der Achse des Koordinatensystems besitzt, auf der der Drehwinkel (ϕ) aufgetragen ist, und
- ausgehend von dem Schnittpunkt (S19, S20), der Funktion (19', 20') - Weiterdrehung des Befestigungselements (6) der anderen Schraubverbindung (9) um den Referenzverdrehwinkel (ϕₛ), so dass bei der anderen Schraubverbindung (9) das gewünschte Vorspannkraft (Fᵥ) vorliegt.

2. Verfahren nach Anspruch 1, **dadurch gekennzeichnet, dass** der Referenzverlauf (14, 16, 18) des Anzugsdrehmoments (M) anhand bekannter Werkstoff-Parameter und/oder der Geometrie der Schraubverbindung (9) berechnet wird.

3. Verfahren nach einem der vorhergehenden Ansprüche, **dadurch gekennzeichnet, dass** das Anzugsdrehmoment (M) mit einer Torsionsmesseinrichtung erfasst wird.

4. Verfahren nach Anspruch 1, **dadurch gekennzeichnet, dass** die Referenzfunktion ( 14',16',18') des Anzugsdrehmoments (M) eine Referenzgerade ist, deren Steigung zumindest bereichsweise der Steigung des Referenzverlaufs (14, 16, 18) kurz vor Erreichen des gewünschten Anzugsdrehmoments (Mᵥ) entspricht.

5. Verfahren nach Anspruch 1, **dadurch gekennzeichnet, dass** die Funktion (19', 20') eine Gerade ist, deren Steigung zumindest bereichsweise der Steigung des Verlaufs (19, 20) des Anzugsdrehmoments (M) kurz vor Erreichen des gewünschten Anzugsdrehmoments (Mᵥ) ist.

6. Verfahren nach einem der vorhergehenden Ansprüche, **dadurch gekennzeichnet, dass** beim Zusammenfallen der Geraden und Referenzgeraden das Befestigungselement (6) der anderen Schraubverbindung (9) um den Referenzdrehwinkel (ϕs) weitergedreht wird.

7. Verfahren nach einem der vorhergehenden Ansprüche, **dadurch gekennzeichnet, dass** beim Zusammenfallen der Schnittpunkte (S14, S16, S18, S20), der Funktion (19', 20') und der Referenzfunktion (14',16',18') auf derAchse des Koordinatensystems eine Weiterdrehung des Befestigungselements (6) der anderen Schraubverbindung (9) um den Referenzverdrehwinkel (ϕs) erfolgt.

8. Verfahren nach einem der vorhergehenden Ansprüche, **dadurch gekennzeichnet, dass** -wenn die Schnittpunkte (S14, S16, S18, S19, S20) oder die Gerade und die Referenzgerade nicht zusammenfallen- eine Weiterdrehung des Befestigungselements (6) der anderen Schraubverbindung (9) um einen korrigierten Referenzverdrehwinkel oder mit einem korrigierten Anzugsdrehmoment erfolgt.

9. Verfahren nach Anspruch 8 **dadurch gekennzeichnet, dass** die Korrektur in Angängigkeit von der Größe der Abweichung der Schnittpunkte (S14, S16, S18, S19, S20) oder der Geraden und der Referenzgeraden zueinanander erfolgt, und dass- wenn um den korrigierten Referenzverdrehwinkel weitergedreht wird- das Anzugsdrehmoment (M) überwacht wird oder -wenn mit dem korrigierten Anzugsdrehmoment weitergedreht wird- der Weiterdrehungswinkel überwacht wird.

10. Verfahren nach einem der vorhergehenden Ansprüche, **dadurch gekennzeichnet, dass** die Referenzfunktion (14', 16', 18') und der Referenzverlauf (14, 16, 18) gespeichert werden.

11. Verfahren nach einem der vorhergehenden Ansprüche, **dadurch gekennzeichnet, dass** ein maximales und/oder minimales Anzugsdrehmoment (M) vorgebbar ist.

12. Verfahren nach einem der vorhergehenden Ansprüche, **dadurch gekennzeichnet, dass** ein maximaler und/oder minimaler Drehwinkel (ϕ) des Befestigungselements (6) der anderen Schraubverbindung (9) vorgebbar ist

13. Verfahren nach einem der vorhergehenden Ansprüche, **dadurch gekennzeichnet, dass** eine minimale und/oder maximale Steigung der Funktion (19', 20') vorgebbar ist.

## Claims

1. Process used to apply a desired initial tension (Fᵥ) to a screw connection (9) which is used to join at least components (7, 8) to each other, with the following steps:
- Determine a reference curve (14, 16, 18) for the tightening torque (M) of the screw connection depending upon the turning angle (ϕ) of an attachment element of the screw connection, entailing the performance of test procedures on several screw connections (9) in order to determine the tightening torque depending upon the turning angle (ϕ), and determining these test procedures mathematically, or calculating this reference procedure (14, 16, 18) of the tightening torque of the screw connection.
- Determine a reference function (14', 16', 18') which at least broadly corresponds to the reference procedure (14, 16, 18) and which possesses a point of intersection (S14, S16, S18) with an axis of a system of coordinates on which the turning angle (ϕ) is recorded.
- Form the mean value of a reference turning angle (ϕₛ) of the attachment element which lies between the turning angle (ϕₒ) and the point of intersection (S14, S16, S18) and the turning angle (ϕᵥ) allocated to the desired tightening torque (Mᵥ).
- Record a curve (19, 20) of the tightening torque (M) of another screw connection (9) depending upon the turning angle (ϕ) of an attachment element (6) of the other screw connection (9).
- Determine a function (19', 20') which at least broadly corresponds to the curve of the tightening torque (M) and which has a point of intersection (S19, S20) with the axis of the system of coordinates that is recorded on the turning angle (ϕ), and
- starting from the point of intersection (S19, S20), the function (19', 20') - Continue turning the attachment element (6) of the other screw connection (9) around the reference turning angle (ϕₛ), so that the other screw connection (9) has the desired initial tension (Fᵥ).

2. Procedure in accordance with claim 1, which is **characterized by** fact that the reference curve (14, 16, 18) of the tightening torque (M) is calculated using known material parameters and/or the geometry of the screw connection (9).

3. Procedure in accordance with one of the aforementioned claims, which is **characterized by** the tightening torque (M) being measured using a torsion measurement device.

4. Procedure in accordance with claim 1, which is **characterized by** the fact that the reference function (14', 16', 18') of the tightening torque (M) is a reference line whose incline corresponds at least broadly to the incline of the reference curve (14, 16, 18) shortly before the desired tightening torque (Mᵥ) is reached.

5. Procedure in accordance with claim 1, which is **characterized by** the fact that the function (19', 20') is a line whose incline corresponds at least broadly to the incline of the curve (19, 20) of the tightening torque (M) shortly before the desired tightening torque (Mᵥ) is reached.

6. Procedure in accordance with one of the aforementioned claims, which is **characterized by** the fact that at the point of coincidence of the lines and reference lines of the attachment element (6), the other screw connection (9) continues to be turned around the reference turning angle (ϕₛ).

7. Procedure in accordance with one of the aforementioned claims, which is **characterized by** the fact that at the point of coincidence of the points of intersection (S14, S16, S18, S20), the function (19', 20') and the reference function (14', 16' 18'), the attachment element (6) of the other screw connection continues to be turned on the axis of the system of coordinates around the reference turning angle.

8. Procedure in accordance with one of the aforementioned claims, which is **characterized by** the fact that - if the points of intersection (S14, S16, S18, S20) or the lines and the reference lines do not coincide - a further turning of the attachment element (6) of the other screw connection (9) is performed around a corrected reference turning angle or with a corrected tightening torque.

9. Procedure in accordance with claim 8, which is **characterized by** the fact that the correction is performed depending upon the magnitude of the deviation of the points of intersection (S14, S16, S18, S20) or of the lines and the reference lines relative to each other, and that - if the rotation continues around the corrected reference turning angle - the tightening torque (M) is monitored or - if the rotation continues with the corrected tightening torque - the continued turning angle is monitored.

10. Procedure in accordance with one of the aforementioned claims, which is **characterized by** the fact that the reference function (14', 16' 18') and the reference curve (14, 16, 18) is stored.

11. Procedure in accordance with one of the aforementioned claims, which is **characterized by** the fact that a maximum and/or minimum tightening torque (M) can be preset.

12. Procedure in accordance with one of the aforementioned claims, which is **characterized by** the fact that a maximum and/or minimum turning angle (ϕ) of the attachment element (6) of the other screw connection (9) can be preset.

13. Procedure in accordance with one of the aforementioned claims, which is **characterized by** the fact that a minimum and/or maximum increase of the function (19', 20') can be preset.

## Revendications

1. Procédure pour l'application d'une force de tarage (Fᵥ) souhaitée d'un raccord vissé (9) au moyen de laquelle au moins deux composants (7, 8) sont fixés entre eux en respectant les étapes suivantes :
- Saisie d'une courbe de référence (14, 16, 18) du couple de serrage (M) du raccord vissé en fonction de l'angle de rotation (ϕ) d'un élément de fixation du raccord vissé, en saisissant sur plusieurs raccords vissés (9) des courbes d'essai du couple de serrage en fonction de l'angle de rotation (ϕ) afin de pondérer mathématiquement ces courbes d'essai, ou calcul de cette courbe de référence (14, 16, 18) du couple de serrage du raccord vissé.
- Définition d'une fonction de référence (14', 16', 18') correspondant au moins approximativement au niveau des zones à la courbe de référence (14, 16, 18) du couple de serrage (M) et possédant un point d'intersection (S14, S16, S18) avec un axe d'un système de coordonnées sur lequel l'angle de rotation (ϕ) est porté.
- Former la valeur moyenne d'un angle de rotation de référence (ϕ ?) de l'élément de fixation situé entre l'angle de rotation (ϕ ₒ) présent au point d'intersection (S14, S16, S18) et l'angle de rotation (ϕᵥ) attribué au couple de serrage souhaité (Mᵥ).
- Saisie d'une courbe (19, 20) du couple de serrage (M) d'un autre raccord vissé (9) en fonction de l'angle de rotation (ϕ) d'un élément de fixation (6) de l'autre raccord vissé (9).
- Définition d'une fonction (19', 20') correspondant au moins approximativement au niveau des zones à la courbe du couple de serrage et possédant un point d'intersection (S19, S20) avec l'axe du système de coordonnées sur lequel l'angle de rotation (ϕ) est porté et,
- en partant du point d'intersection (S19, S20), de la fonction (19', 20'), l'élément de fixation (6) de l'autre raccord vissé (9) est encore tourné autour de l'angle de rotation de référence (ϕ ?) de sorte que la force de tarage (Fᵥ) souhaitée soit présente au niveau de l'autre raccord vissé (9).

2. Procédure suivant la revendication 1, **caractérisée par le fait que** la courbe de référence (14, 16, 18) du couple de serrage (M) est calculée au moyen de paramètres de matières connues et/ou de la géométrie du raccord vissé (9).

3. Procédure suivant l'une des revendications précédentes, **caractérisée par le fait que** le couple de serrage (M) est saisi à l'aide d'un dispositif de mesure de torsion.

4. Procédure suivant la revendication 1, **caractérisée par le fait que** la fonction de référence (14', 16', 18') du couple de serrage (M) est une droite de référence dont la pente correspond au moins au niveau des zones à la pente de la courbe de référence (14, 16, 18) juste avant d'atteindre le couple de serrage souhaité (Mᵥ).

5. Procédure suivant la revendication 1, **caractérisée par le fait que** la fonction (19', 20') est une droite dont la pente correspond au moins au niveau des zones à la pente de la courbe (19, 20) du couple de serrage (M) juste avant d'atteindre le couple de serrage souhaité Mᵥ).

6. Procédure suivant l'une des revendications précédentes, **caractérisée par le fait que** l'élément de fixation (6) de l'autre raccord vissé (9) est encore tourné autour de l'angle de rotation de référence (ϕₛ) lorsque la droite et la droite de référence coïncident.

7. Procédure suivant l'une des revendications précédentes, **caractérisée par le fait que** l'élément de fixation (6) de l'autre raccord vissé (9) est encore tourné autour de l'angle de rotation de référence (ϕₛ) lorsque les points d'intersection (S14, S16, S18, S20), la fonction (19', 20') et la fonction de référence (14', 16', 18') coïncident sur l'axe du système de coordonnées.

8. Procédure suivant l'une des revendications précédentes, **caractérisée par le fait que** l'élément de fixation (6) de l'autre raccord vissé (9) est encore tourné autour d'un angle de rotation de référence (ϕₛ) corrigé ou avec un couple de serrage corrigé lorsque les points d'intersection (S14, S16, S18, S19, S20) ou la droite et la droite de référence ne coïncident pas.

9. Procédure suivant la revendication 8, **caractérisée par le fait que** la correction est effectuée en fonction de l'importance de l'écart des points d'intersection (S14, S16, S18, S19, S20) ou de la droite par rapport à la droite de référence et que le couple de serrage (M) est surveillé lorsque l'on continue de tourner autour de l'angle de rotation de référence corrigé, ou que l'angle de la rotation poursuivie est surveillé lorsque l'on continue de tourner avec le couple de serrage corrigé.

10. Procédure suivant l'une des revendications précédentes, **caractérisée par le fait que** la fonction de référence (14', 16', 18') et la courbe de référence (14, 16, 18) sont enregistrées.

11. Procédure suivant l'une des revendications précédentes, **caractérisée par le fait qu'**un couple de serrage (M) maxi et/ou mini peut être prescrit.

12. Procédure suivant l'une des revendications précédentes, **caractérisée par le fait qu'**un angle de rotation (ϕ) maxi et/ou mini de l'élément de fixation (6) de l'autre raccord vissé (9) peut être prescrit.

13. Procédure suivant l'une des revendications précédentes, **caractérisée par le fait qu'**une pente mini et/ou maxi de la fonction (19', 20') peut être prescrite.
